# EUROPÄISCHE PATENTANMELDUNG

(11) **EP 2 787 197 A1**
(43) Veröffentlichungstag der Anmeldung: **08.10.2014**
(21) Anmeldenummer: 13162490.0
(22) Anmeldetag: 05.04.2013
(51) Int. Cl.: F02C 3/30, F02C 6/14, F02C 6/18

(54) **Gasturbinenkraftwerk mit Wärmespeicher zur Wasseraufbereitung für ein STIG-Verfahren**

(71) Anmelder: Siemens Aktiengesellschaft, 80333 München (DE)
(72) Erfinder: Lenk, Uwe, 08064 Zwickau (DE); Tremel, Alexander, 91052 Erlangen (DE)

(57) **Zusammenfassung**

Die Erfindung betrifft ein Gasturbinenkraftwerk (1), umfassend eine einen Kompressor (11), eine Brennkammer (12) und einen Expander (13) aufweisende Gasturbine (10), sowie einen wenigstens teilweise mit Wasser gefüllten Wasserspeicher (20), welcher mit der Gasturbine (10) über eine Zuführleitung (15) fluidtechnisch derart verschaltet ist, dass Wasser aus dem Wasserspeicher (20) der Gasturbine (10) zur Erhöhung des Massenstroms zugeleitet werden kann, wobei der Wasserspeicher (10) und/oder die Zuführleitung (15) mit einem Wärmespeicher (30) wärmetechnisch verschaltet ist, welcher Wärmespeicher (30) mittels einer elektrisch betriebenen Wärmezufuhreinrichtung (40) mit Wärme versorgt werden kann.

## Beschreibung

Aufgrund der zunehmenden Einspeisungen von elektrischer Energie aus fluktuierenden, erneuerbaren Energiequellen in die öffentlichen Stromübertragungs- und -versorgungsnetzwerke werden Gasturbinenkraftwerke zunehmend für Regelaufgaben im Rahmen des Ausgleichs von Fluktuationen herangezogen. Demzufolge ist jedoch auch erforderlich, dass Gasturbinenkraftwerke flexibel betrieben werden können, d.h. über verhältnismäßig kurze Zeitspannen große Leistungsänderungen vornehmen zu können. Ein solcher verstärkt flexibilisierte Einsatz von Gasturbinenkraftwerken hat somit auch zur Folge, dass An- und Abfahrvorgänge in dem Gasturbinenkraftwerk verhäuft vorgenommen werden müssen, wodurch jedoch die Lebensdauer vermindert bzw. die Wartungshäufigkeit stark erhöht wird. Dies wiederum hat einen signifikanten Einfluss auf die Wirtschaftlichkeit des Betriebs.

Aufgrund der teilweise großen elektrischen Strommengen, die den öffentlichen Stromübertragungsnetzwerken und Stromversorgungsnetzwerken im Rahmen der Leistungsregulierung zur Verfügung gestellt werden müssen, bzw. auch aus diesen aufgenommen werden können, ergibt sich ein Bedarf zur großtechnischen Energiespeicherung. Diese Energiespeicherung erfordert Speicherleistungen im Megawatt-Bereich, insbesondere von mehr als 1MW, und darüber.

Großtechnische Stromspeicherung erfolgt heutzutage bevorzugt durch Pumpspeicherkraftwerke. Solche Pumpspeicherkraftwerke erfordern geeignete topographische Rahmenbedingungen, etwa um die von einem Pumpspeicherkraftwerk umfassten Wasserreservoirs auf unterschiedlichen Höhenniveaus anzubringen. Aus diesem Grund weist diese Technologie auch eine verhältnismäßig geringe volumetrische Energiespeicherdichte und damit hinsichtlich der Investitionskosten einen nicht besonders wirtschaftlichen Betrieb auf. Aufgrund dieser geologischen Einschränkungen eignet sich die Errichtung von Pumpspeicherkraftwerken nur in wenigen Regionen dieser Erde.

Eine weitere Möglichkeit der großtechnischen Stromspeicherung kann bspw. durch Druckluftspeicherkraftwerke realisiert werden, die ebenfalls eine verhältnismäßig geringe volumetrische Energiespeicherdichte aufweisen und damit hohe Investitions- und Betriebskosten verursachen. Druckluftspeicherkraftwerke erfordern zudem meist unterirdisch angebrachte Druckluftspeicherbehältnisse, deren Errichtung und Wartung erneut wieder Anforderungen an geologische Gegebenheiten stellt.

Weitere großtechnische Technologien zur Speicherung von elektrischem Strom sind bspw. Anlagen zur Power-to-Gas-Konvertierung, wobei etwa durch Elektrolyse unter Aufnahme von elektrischem Strom Brennstoff erzeugt werden kann. Die Rückverstromung dieses Brennstoffes kann dann etwa mit Gasturbinen bzw. Brennstoffzellen erfolgen. Vorteilhaft an dieser Technologie ist eine hohe volumetrische Energiespeicherdichte, aufgrund der relativ platzsparenden chemischen Speichermöglichkeiten. Aufgrund der zahlreichen energieaufwändigen Umwandlungsschritte, die im Rahmen der Konvertierung zu vollführen sind, weisen Power-to-Gas-Anlagen jedoch typischerweise einen verhältnismäßig geringen Speicherwirkungsgrad auf.

Trotz der oben beschriebenen technologischen Ansätze zur Speicherung von elektrischem Strom in großtechnischem und kraftwerkstechnischem Maßstab ist es wünschenswert, eine Technologie vorzuschlagen, die die oben in dem Stand der Technik beschriebenen Nachteile vermeiden kann. Insbesondere sollte diese Speichertechnologie einen flexiblen Betrieb erlauben, der auch die Wahrnehmung von Regelaufgaben zur Stabilisierung der öffentlichen Stromversorgungsnetzwerke ermöglichen kann. Zudem ist es wünschenswert, dass die vorzuschlagende Technologie durch einfache Ergänzungen bzw. Erweiterungen von bereits bestehender kraftwerkstechnischer Infrastruktur verwirklicht werden kann. Hierbei soll sowohl ein investitionskostentechnischer als auch ein betriebskostentechnischer Vorteil realisierbar sein.

Diese der Erfindung zugrundeliegenden Aufgaben werden durch ein Gasturbinenkraftwerk gemäß Anspruch 1 sowie durch ein Verfahren zum Betrieb eines solchen wie auch nachfolgend beschriebenen Gasturbinenkraftwerks gemäß Anspruch 13 gelöst.

Insbesondere werden diese der Erfindung zugrundeliegenden Aufgaben durch ein Gasturbinenkraftwerk gelöst, welches eine einen Kompressor, eine Brennkammer und einen Expander aufweisende Gasturbine umfasst, sowie einen wenigstens teilweise mit Wasser gefüllten Wasserspeicher, welcher mit der Gasturbine über eine Zuführleitung fluidtechnisch derart verschaltet ist, dass Wasser aus dem Wasserspeicher der Gasturbine zur Erhöhung des Massenstroms bei Betrieb zugeleitet werden kann, wobei der Wasserspeicher und/oder die Zuführleitung mit einem Wärmespeicher wärmetechnisch verschaltet ist, welcher Wärmespeicher mittels einer elektrisch betriebenen Wärmezuführeinrichtung mit Wärme versorgt werden kann.

Weiterhin werden diese der Erfindung zugrundeliegenden Aufgaben durch ein Verfahren zum Betrieb eines solchen vorab wie auch nachfolgend beschriebenen Gasturbinenkraftwerks gelöst, welches folgende Schritte umfasst:
- Betreiben einer elektrisch betriebenen Wärmezufuhreinrichtung und Speicherung dieser Wärme in einem Wärmespeicher;
- Entnehmen von Wasser aus dem Wasserspeicher, wobei das Wasser in dem Wasserspeicher und/oder außerhalb des Wasserspeichers thermisch mit Wärme aus dem Wärmespeicher konditioniert wird;
- Zuleiten des so thermisch konditionierten Wassers an die Gasturbine zur Erhöhung des Massenstroms bei deren Betrieb.

Die Grundidee der vorliegenden Erfindung liegt in einer Kombination von Leistungserhöhung einer Gasturbine bei Betrieb mittels Wasserzuleitung aus einem Wasserspeicher zur Erhöhung des Massenstroms und Speicherung von elektrischer Energie, insbesondere aus den öffentlichen Stromübertragungsnetzwerken und Stromversorgungsnetzwerken zu Zeiten einer Überschussproduktion von elektrischer Energie, und zeitlicher Zwischenspeicherung in einem Wärmespeicher in Form von thermischer Energie.

Das Verfahren zur Leistungserhöhung bei Gasturbinen unter Zuführung von Wasser bzw. Dampf ist aus dem Stand der Technik bereits hinlänglich bekannt. Bekannt ist bspw. die Injektion von Wasserdampf in die Brennkammer einer in Betrieb stehenden Gasturbine, wobei infolge der Dampfinjektion der Massenstrom an Abgas erhöht wird, der unter Abgabe von mechanischer Arbeit über den Expander der Gasturbine entspannt wird. Diese in der Literatur auch als STIG-Konzept (Steam Injection Gas Turbine Cycle) und Cheng-Cycle bekannte Technologie erlaubt eine signifikante auch kurzfristige Leistungserhöhung bei Betrieb der Gasturbine. Da diese Leistungserhöhung auch kurzzeitig erreicht werden kann, eignet sich eine solche Zuführung von Wasser und/oder Dampf besonders zur verbesserten Flexibilisierung eines Gasturbinenkraftwerks. Neben einer Erhöhung des Massenstroms des über den Expander entspannten Gas-Abgasstroms weist die Zuleitung von Wasser zur Gasturbine auch noch weitere Vorteile auf. Diese sind bspw. eine Erniedrigung von NOₓ-Emissionen, die zu den unerwünschten Umweltschadstoffen zu rechnen sind.

An dieser Stelle soll darauf hingewiesen werden, dass im Rahmen der vorliegenden Erfindung nicht ausdrücklich zwischen Wasser in seinen verschiedenen Aggregatformen unterschieden werden soll, soweit dies nicht vorliegend anderes angegeben ist. Insofern soll unter dem Begriff Wasser flüssiges Wasser genauso verstanden werden wie auch Wasserdampf (kurz: Dampf).

Die Zuführung von Wasser aus dem Wasserspeicher zur Gasturbine erfordert jedoch im Normalfall für einen effizienten Betrieb eine thermische Konditionierung vor Zuführung des Wassers in die Gasturbine. Die thermische Konditionierung, etwa zur Erzeugung von Wasserdampf aus flüssigem Wasser, erlaubt bspw. die Zuleitung von Wasser an die Gasturbine auf einem stark erhöhten Druckniveau. Dies erleichtert einerseits die Zuführung des Wassers, da ein Druckgefälle zwischen Zuführleitung und dem Ort, an welchem das Wasser der Gasturbine zugeleitet wird, besteht. Zudem steht die in dem Wasser beinhaltete thermische Energie auch dem thermischen Prozess der Entspannung über den Expander innerhalb der Gasturbine zur Verfügung, weshalb diese thermische Energie zu einer erhöhten mechanischen Entspannungsleistung führt.

Der vorliegende Erfindungsgedanke basiert weiterhin darauf, dass elektrische Energie mittels einer elektrisch betriebenen Wärmezuführeinrichtung in thermische Energie umgesetzt und in dem Wärmespeicher zur zeitlich nachfolgenden Verwendung zwischengespeichert werden kann. Bei Abruf dieser thermischen Energie dient die so zwischengespeicherte Wärme zur thermischen Aufbereitung von Wasser aus dem Wasserspeicher, wobei die in dem Wasser befindliche thermische Energie in einen Gasturbinenprozess wieder umgesetzt wird, um elektrische Energie zu gewinnen.

An dieser Stelle soll auch darauf hingewiesen werden, dass der Begriff des Gasturbinenkraftwerks in seiner breitesten Bedeutung verstanden werden soll. Insbesondere sind hierzu Simple-Cycle Anlagen, GuD-Anlagen (kombiniertes Gas- und Dampfkraftwerk) oder auch großtechnische Anlagen zu verstehen, die von einer Gasturbine mit elektrischer Energie versorgt werden. Die Bauteile dieser Gasturbine müssen hierbei nicht jeweils auf einer Welle angeordnet sein. Sie können auch voneinander entkoppelt vorliegen.

Die Zuführung des Wassers an die Gasturbine mittels der Zuführleitung kann an unterschiedlichen Orten der Gasturbine erfolgen. Typischerweise erfolgt die Zuleitung in die Brennkammer der Gasturbine. Eine Zuleitung ist aber ebenfalls auch im Bereich des Kompressors möglich. Das Wasser kann hierbei bspw. nach einer ersten Kompressorstufe oder zwischen zwei aufeinanderfolgenden Kompressorstufen eingedüst werden.

Aufgrund der großtechnischen bzw. kraftwerkstechnischen Energiespeicherung soll die vorliegende Anlage bevorzugt bzw. ausschließlich für eine thermische Wärmestromleistungen von wenigstens 1 MW ausgelegt sein, d.h. die intern geleiteten Wärmeströme sollen diesen Leistungsbereich von wenigstens 1 MW in vorbestimmten Abschnitten aufweisen. Insbesondere weist die Wärmezuführeinrichtung eine thermische Wärmeleistung von wenigstens 1 MW auf.

Ebenfalls ist darauf hinzuweisen, dass der Wasserspeicher in einer allgemeinen Form verstanden werden soll. Er ist als Behältnis zu verstehen, in welchem Wasser zeitlich bevorratet werden kann.

Die Vorteile der vorliegenden Erfindung liegen, wie schon angedeutet, in einer geeigneten Überführung der elektrischen Energie, etwa aus öffentlichen Stromversorgungsnetzwerken, in thermische Energie sowie deren Speicherung in einem Wärmespeicher. Die thermische Energie soll dann zur Aufbereitung von Wasser aus einem Wasserspeicher und einer zeitlich versetzten Wasserzuleitung an eine in Betrieb stehende Gasturbine genutzt werden.

Diese technische Lösung kann mittels leicht verfügbarer bzw. herstellbarer Komponenten (Gasturbine, Abhitzedampferzeuger, Wasserspeicher, Wärmespeicher) verwirklicht werden. Hierbei ist es auch möglich, bereits bestehende Gasturbinenkraftwerke durch noch nicht vorhandene Funktionsbauteile leicht nachzurüsten, um ein erfindungsgemäßes Gasturbinenkraftwerk zu verwirklichen. Die dabei zu beherrschenden Abläufe (elektrische Wärmeerzeugung, Wasserzuleitung an die Gasturbine), sind kontrolliert ausführbar.

Erfindungsgemäß wird der Leistungsbereich eines Gasturbinenkraftwerks vorteilhaft erhöht, wodurch die Flexibilisierung seines Einsatzes ebenfalls deutlich verbessert wird. Ebenso kann ein Teillastwirkungsgrad bei Betrieb dieses Gasturbinenkraftwerks deutlich verbessert werden, da etwa bei Reduktion des Brennstoffverbrauchs bei gleichbleibender Leistungsabgabe der Gasturbine das thermisch konditionierte Wasser aus dem Wasserspeicher zur Leistungsanpassung vorgesehen werden kann.

Gemäß einer ersten besonders bevorzugten Ausführungsform der Erfindung ist vorgesehen, dass die Wärmezuführeinrichtung wenigstens teilweise als elektrisch betriebene Heizung, insbesondere als elektrisch betriebene Widerstandsheizung ausgebildet ist. Bevorzugt ist die Wärmezuführeinrichtung nur als elektrisch betriebene Heizung ausgebildet. Die elektrisch betriebene Heizung kann als Widerstandsheizung, aber auch als Elektrodenheizung sowie in anderer technisch ausführbarer Form ausgestaltet sein. Die Heizung weist besonders bevorzugt eine elektrische Heizleistung von wenigstens 1MWₜₕ, bevorzugt von 3 MWₜₕ und ganz besonders bevorzugt von wenigstens 5 MWₜₕ auf. Die elektrisch betriebene Heizung erlaubt in einfacher Weise die direkte Umsetzung von elektrischer Energie in thermische Energie, welche zeitlich zwischengespeichert werden kann.

Gemäß einer weiteren Ausführungsform der Erfindung ist vorgesehen, dass die Wärmezuführeinrichtung als elektrisch betriebene Wärmepumpe ausgebildet ist. Bevorzugt ist die Wärmezuführeinrichtung nur als elektrisch betriebene Wärmepumpe ausgebildet. Ebenfalls weist diese bevorzugt eine elektrische Heizleistung von wenigstens 1 MWₜₕ, bevorzugt von 3 MWₜₕ und ganz besonders bevorzugt von 5 MWₜₕ auf. Eine derartig betriebene Wärmepumpe ist insbesondere besonders günstig zu verwenden, wenn etwa Abwärme auf einem niedrigen Temperaturniveau zur Verfügung steht, wie etwa bei Kühlwasser von z.B. Motoren in einem Temperaturbereich von 70 °C bis 120 °C, die zusätzlich noch genutzt werden kann. Diese Abwärme wird etwa mittels der durch die Wärmepumpe zusätzlich aufgenommenen elektrischen Energie, besonders vorteilhaft thermisch aufbereitet und genutzt.

Ein weiterer vorteilhafter Aspekt des erfindungsgemäßen Gasturbinenkraftwerks gemäß einer weiteren Ausführungsform ist, dass der Wasserspeicher gleichzeitig auch als Wärmespeicher ausgebildet ist, wobei der Wasserspeicher insbesondere eine thermische Isolierung aufweist. In anderen Worten ausgedrückt, entspricht der Wasserspeicher dem Wärmespeicher bzw. ist der Wasserspeicher in den Wärmespeicher integriert. Das Wärmespeichermedium ist folglich in erster Linie Wasser, welches in dem Wasserspeicher bevorratet wird, und infolge der thermischen Konditionierung mittels der Wärmezuführeinrichtung erwärmt werden kann. Da Wasser ein leicht zu handhabender und chemisch weitgehend unbedenklicher Stoff ist, eignet sich diese technische Lösung besonders. Zudem kann durch die Integration zweier Funktionsbauteile in einem Bauteil eine besonders platzsparende Ausführungsform bereit gestellt werden. Durch eine solche Verringerung des Bauteilaufwands werden weiterhin auch die technische Anfälligkeit vermindert, wie auch die Wartungsfähigkeit verbessert.

Gemäß einer Weiterführung dieser Ausführungsform ist vorgesehen, dass der Wärmespeicher als ein wenigstens teilweise mit Wasser gefüllter Dampfspeicher ausgebildet ist. In diesem Fall ist Wasser in erster Linie das Wärmespeichermedium des Wärmespeichers. Es liegt in dem Dampfspeicher typischerweise sowohl in flüssiger wie auch in dampfförmiger Phase vor, wobei je nach Druck- und Temperaturniveau, die dampfförmige Phase einen geringeren bzw. größeren Volumenanteil des Dampfspeichers einnimmt. Die thermische Konditionierung des Wassers in dem Dampfspeicher erfolgt durch die elektrisch betriebene Wärmezuführeinrichtung. Diese technische Einrichtung schließt jedoch nicht aus, dass dem Dampfspeicher bereits thermisch konditioniertes Wasser, also Warmwasser bzw. Heißwasser zugeführt werden kann, um etwa den Wärmeinhalt des Wassers in dem Dampfspeicher zusätzlich zu konditionieren. Aufgrund der gezielten Wärmeabgabe mittels der Wärmezuführeinrichtung ist es möglich, ein geeignetes Druckniveau des dampfförmigen Wassers in den Dampfspeicher einzustellen, so dass dieses bei vorteilhaftem Druckniveau der Gasturbine zur Erhöhung des Massenstroms bei deren Betrieb zugeführt werden kann. Hierbei ist darauf hinzuweisen, dass bei Dampfspeichern die thermische Konditionierung des Wasserdampfes besonders leicht kontrollierbar ist, so dass sich ein Dampfspeicher für eine Ausführung des erfindungsgemäßen Verfahrens besonders eignet.

Gemäß einer weiteren Weiterführung dieses Aspekts ist vorgesehen, dass der Dampfspeicher als einziges Wärmezufuhrmittel eine elektrisch betriebene Heizung oder eine elektrisch betriebene Wärmepumpe aufweist. Hierbei soll wiederum nicht ausgeschlossen werden, dass dem Dampfspeicher auch thermisch konditioniertes Warmwasser bzw. Heißwasser bereits zur Füllung zugeführt werden kann. In alternativen Ausführungsformen können bspw. auch beide Wärmezuführeinrichtungen (elektrisch betriebene Heizung und elektrisch betriebene Wärmepumpe) vorgesehen sein.

Gemäß einer weiteren Ausführungsform der Erfindung ist vorgesehen, dass der Dampfspeicher als Druckspeicher ausgebildet ist, der insbesondere für einen Betriebsdruck von mindestens 15 bar, bevorzugt von 30 bis 40 bar und ganz besonders bevorzugt von 80 bis 150 bar ausgelegt ist. Eine Erhöhung des Drucks über diese Grenze hinaus ist zwar denkbar, jedoch für die vorliegende Anwendung nicht als bevorzugt angestrebt. Die ausführungsgemäßen Druckniveaus liegen hierbei allesamt bevorzugt über dem Druckniveau der Brennkammer bei Betrieb der Gasturbine, so dass eine geeignete Zuführung des dampfförmigen Wassers aus dem Dampfspeicher zur Gasturbine leicht erfolgen kann.

Gemäß einer weiteren bevorzugten Ausführungsform der Erfindung ist vorgesehen, dass der Dampfspeicher als Dampftrommel ausgebildet ist, welche ein Volumen von mindestens 15 m³, insbesondere von wenigstens 20 m³ und bevorzugt von wenigstens 30 m³ aufweist. Eine geeignete Isolierung kann hierbei auf oder in der Dampftrommel zusätzlich noch vorgesehen sein. Derartige Dampftrommeln sind bspw. für einen Druck bis zu 33bar bei 240°C oder bspw. bis zu 38bar bei 250°C nach kraftwerksüblichen Anforderungen ausgelegt. Die Nutzung von Dampftrommeln als Dampfspeicher erlaubt hierbei eine Verminderung des Fertigungs- und Entwicklungsaufwands, da derartige Dampftrommeln bereits vielfach in fossil befeuerten Dampferzeugern Einsatz finden. Insbesondere sind solche Dampftrommeln in Abhitzedampferzeugern von kombinierten Gas- und Dampfkraftwerksanlagen im Einsatz.

Gemäß einer weiteren bevorzugten Ausführungsform der Erfindung ist vorgesehen, dass der Wasserspeicher bei Normalbedingungen einen Füllstand des flüssigen Wassers von mindestens 10% und höchstens 90% des Volumens des Wasserspeichers aufweist, bevorzugt einen Füllstand von wenigstens 30% und höchstens 80% des Volumens des Wasserspeichers aufweist, und ganz besonders bevorzugt einen Füllstand von mindestens 40% und höchstens 70% des Volumens des Wasserspeichers aufweist. Ebenfalls kann der Füllstand während eines gewöhnlichen Betriebs innerhalb der genannten Füllstandsgrenzen liegen. Die Füllstandsgrenzen betreffen auch eine Ausführungsform, bei welcher der Wasserspeicher als Dampfspeicher ausgeführt ist, wobei der Rest des Volumens des Wasserspeichers typischerweise von Wasserdampf für die Zuführung an die Gasturbine ausgefüllt ist. Insofern steht bei Betrieb des Gasturbinenkraftwerks stets eine ausreichende Menge an Wasserdampf zur Verfügung, so dass auch große Leistungssprünge bei Betrieb des Gasturbinenkraftwerks über längere Zeiträume ermöglicht werden können.

Entsprechend einer weiteren vorteilhaften Ausführungsform weist der Wasserspeicher eine bei betriebsgemäßer Anordnung oben am Wasserspeicher angeordnete Entnahmeöffnung auf, welche insbesondere ein Entnahmeventil aufweist. Das Entnahmeventil kann hierbei auch alternativ in der Zuführleitung zwischen dem Wärmespeicher und der Gasturbine vorgesehen sein. Das heißt, zwischen Wärmespeicher und Gasturbine ist ein Ventil geschaltet, welches erlaubt, die der Gasturbine zugeleitete Wassermenge geeignet einzustellen. Eine ausführungsgemäße Anordnung oben an dem Wasserspeicher bezieht sich auf eine Anordnung wie diese während des regulären Betriebs vorgesehen ist. Insbesondere bei Ausführung des Wasserspeichers als Dampfspeicher kann so gewährleistet werden, dass aus dem Wasserspeicher stets dampfförmiges Wasser entnommen werden kann, ohne Gefahr auch flüssiges Wasser in die Gasturbine mit einzuleiten.

Gemäß einer weiteren Ausführungsform der Erfindung kann vorgesehen sein, dass ein Drucksensor mit von dem Gasturbinenkraftwerk umfasst ist, welcher erlaubt, den Druck des der Gasturbine zugeführten Wassers zu erfassen. Bevorzugt ist der Drucksensor in dem Dampfspeicher selbst angeordnet. Alternativ kann jedoch der Drucksensor auch mit der Zuführleitung verschaltet sein, und am Ort der Anbringung den jeweiligen Dampfdruck erfassen. Zudem weist bevorzugt das Gasturbinenkraftwerk auch eine Steuerung bzw. Regelung auf, welche die Zufuhr von Wasser an die Gasturbine nur dann ermöglicht, wenn ein vorbestimmter Druck an Dampf erreicht ist, insbesondere wenn etwa der Brennkammerdruck überschritten ist. Um dieses technische Entscheidungskriterium feststellen zu können, kann auch ein geeigneter Sensor an der Brennkammer angebracht sein. Die Sensoren ermöglichen eine kontrollierte und gezielte Wasserzuleitung an die Gasturbine, ohne das Risiko eingehen zu müssen, dass der Druck des so zugeleiteten Wassers unterhalb des Brennkammerdrucks liegt.

Entsprechend einer weiteren Ausführungsform der Erfindung kann der Wärmespeicher einen Durchlauferhitzer aufweisen, welcher mit der Zuführleitung fluidtechnisch verschaltet ist. Der Durchlauferhitzer ermöglicht hierbei die thermische Aufbereitung des Wassers, welches der Gasturbine zugeführt wird. Ein Durchlauferhitzer ist im einfachsten Sinn als eine Anordnung einer Leitung zu verstehen, die etwa Leitungsschleifen aufweist, welche wiederum in dem Wärmespeicher angeordnet sind, so dass das Wasser während seiner Leitung durch diese Leitungsschleifen Wärme aus dem Wärmespeicher aufnehmen kann. Eine thermische Konditionierung mittels des Durchlauferhitzers gewährleistet insbesondere gezielt Wasser thermisch aufzubereiten, welches nachfolgend der Gasturbine zur Leistungserhöhung zugeführt werden soll. Hierbei ist es nicht erforderlich bzw. möglicherweise auch nicht gewünscht, dass der Wärmespeicher mit dem Wasserspeicher identisch ist.

Entsprechend einer ersten besonders bevorzugten Ausführungsform des erfindungsgemäßen Verfahrens ist vorgesehen, dass das Betreiben der elektrisch betriebenen Wärmezuführeinrichtung unter Nutzung von Überschussstrom erfolgt. Hierbei kann unter Nutzung von besonders günstigem Überschussstrom elektrisch Energie in thermische Energie überführt werden, welche nachfolgend zu Zeiten, zu welchen elektrische Energie zu einem höheren Preis den öffentlichen Stromversorgungsnetzwerken zugeführt werden kann, wieder zur Rückverstromung genutzt werden kann.

Nachfolgend soll die Erfindung anhand einzelner in Figuren wiedergegebener Ausführungsformen im Einzelnen erklärt werden. Hierbei ist darauf hinzuweisen, dass die Figuren lediglich schematisch zu verstehen sind und keine Einschränkung hinsichtlich der Ausführbarkeit der Erfindung erlauben sollen.

Ebenfalls soll darauf hingewiesen werden, dass im Rahmen der Erfindung die Bauteile einzeln sowie in Kombination miteinander beansprucht werden sollen, soweit die Kombination zur Lösung der Erfindungsaufgabe geeignet ist.

Die in den nachfolgenden Figuren gezeigten Bauteile mit gleichen Bezugszeichen sollen eine gleiche Funktion bzw. Wirkungsweise haben.

Hierbei zeigen:
- Figur 1: eine erste Ausführungsform des erfindungsgemäßen Gasturbinenkraftwerks 1 in schematischer Schaltansicht;
- Figur 2: eine weitere Ausführungsform des erfindungsgemäßen Gasturbinenkraftwerks in schematischer Schaltansicht;
- Figur 3: eine weitere Ausführungsform des erfindungsgemäßen Gasturbinenkraftwerks 1 in schematischer Schaltansicht;
- Figur 4: eine Skizze eines in einem erfindungsgemäßen Gasturbinenkraftwerks 1 einsetzbaren Wasserspeichers 20, der als Dampfspeicher ausgeführt ist;
- Figur 5: eine graphische Darstellung auf Grundlage von Modellrechnungen des veränderlichen elektrischen Wirkungsgrades (EE) eines erfindungsgemäßen Gasturbinenkraftwerks 1 in Abhängigkeit der veränderlichen Leistungsabgabe (GTP) der Gasturbine 10;
- Figur 6: eine graphische Darstellung auf Grundlage von Modellrechnungen der veränderlichen Leistung (P) einer anderen Ausführungsform des erfindungsgemäßen Gasturbinenkraftwerks 1 in Abhängigkeit der anteilsmäßigen Menge an in eine Gasturbine 10 eingeleiteten Wassermenge in Dampfform (SI);
- Figur 7: eine Ausführungsform des erfindungsgemäßen Verfahrens zum Betrieb eines vorab wie auch nachfolgend beschriebenen Gasturbinenkraftwerks.

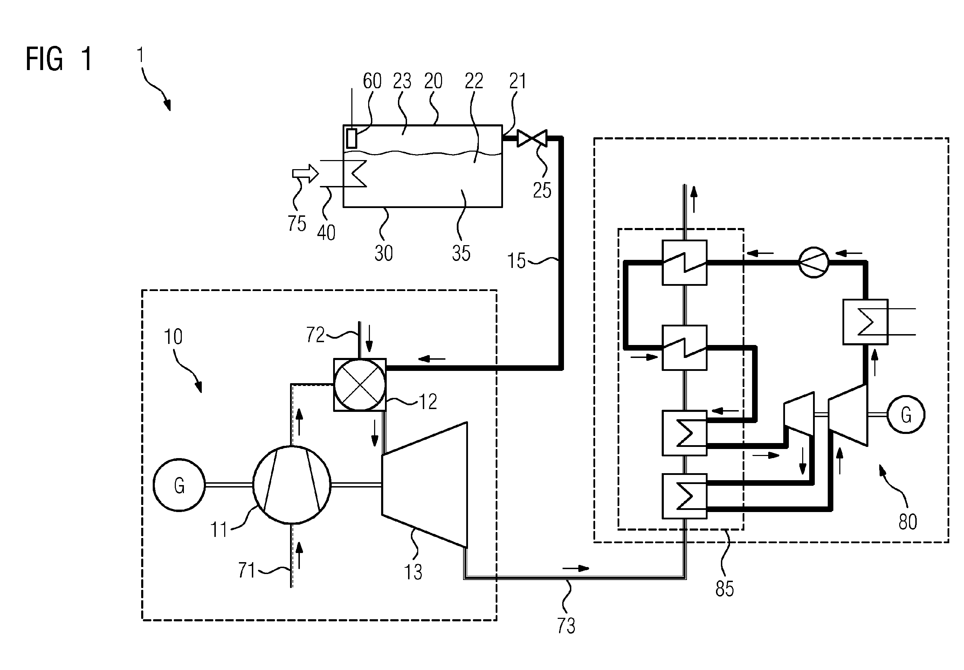

Figur 1 zeigt eine erste Ausführungsform des erfindungsgemäßen Gasturbinenkraftwerks 1, welches als kombiniertes Gas- und Dampfkraftwerk ausgebildet ist. Der Teil der Gasturbine 10 weist einen Kompressor 11 auf, durch den Luft 71 verdichtet und an die Brennkammer 12 weitergeleitet werden kann. In der Brennkammer 12 wird Brennstoff 72 zusammen mit dieser verdichteten Luft 71 zu einem Abgas verbrannt, welches dem Expander 13 zur Arbeitsleistung durch Entspannung zugeleitet wird. Das aus dem Expander abgeleitete Abgas 73 wird einem Abhitzedampferzeuger 85 des Dampfteils zugeführt. Mittels der in diesem Abgas 73 befindlichen thermischen Energie wird in dem Abhitzedampferzeuger 85 Wasser aufbereitet, welches der Dampfturbine 80 zur Entspannung und folglich zur Stromerzeugung zugeleitet wird. Sowohl die Gasturbine 10 als auch die Dampfturbine 80 wirken jeweils mit einem Generator (G) zusammen, über welchen elektrische Energie erzeugt und bereitgestellt werden kann.

Weiterhin weist das Gasturbinenkraftwerk 1 einen Wasserspeicher 20 auf, der ebenfalls als Wärmespeicher 30 ausgebildet ist. Insofern ist ausführungsgemäß der Warmwasserspeicher 20 und der Wärmespeicher 30 als ein Funktionsbauteil ausgeführt. Das in dem Wärmespeicher 30 befindliche Wärmespeichermedium 35 ist somit Wasser 22, welches in flüssiger Form, wie auch in dampfförmiger Form (Bezugszeichen 23) vorliegt. Zur thermischen Konditionierung des in dem Wärmespeicher 30 befindlichen Wassers 22 ist eine Wärmezuführeinrichtung 40 vorgesehen, die elektrisch mittels elektrischen Stroms 75 betrieben werden kann. Bei diesem Betrieb wird elektrischer Strom 75 in Wärme umgesetzt, die in dem Wärmespeicher 30 zwischengespeichert werden kann. Ausführungsgemäß ist der Wärmespeicher 30 als Dampfspeicher ausgebildet.

Um das Druckniveau in dem Wärmespeicher 30 im Bereich der Dampfphase zu erfassen, umfasst der Wärmespeicher 30 einen Drucksensor 60. Ebenfalls ist in dem Wärmespeicher 30 bei betriebsgemäßer Anordnung im oberen Bereich eine Entnahmeöffnung 21 vorgesehen, an welche die Zuführleitung 15 anschließt. Der obere Bereich entspricht hierbei demjenigen Bereich, in welchem die Dampfphase von Wasser vorliegt. Die Zuführleitung 15 verbindet den Wärmespeicher 30 mit der Brennkammer 12 der Gasturbine 10. Durch Entnahme von dampfförmigem Wasser aus dem Wärmespeicher 30 und Zuleitung an die Brennkammer 12 während des Betriebes der Gasturbine 10 kann somit der Massenstrom des Abgas-Gemisches erhöht werden, welches über den Expander zur Rückverstromung entspannt wird. Um die Menge an Wasserdampf, welche aus dem Wärmespeicher 30 entnommen wird, geeignet einzustellen, ist in die Zuführleitung 15 ein Entnahmeventil 25 verschaltet, welches geregelt bzw. gesteuert eingestellt werden kann.

Bei Betrieb der vorliegenden Ausführungsform des Gasturbinenkraftwerks 1 wird zunächst elektrischer Strom 75 mittels der elektrisch betriebenen Zuführeinrichtung 40 in dem als Dampfspeicher ausgeführten Wärmespeicher 30 zwischengespeichert. In dem geschlossenen Dampfspeicher befindet sich etwa zu Beginn der Speicherung Wasser auf einem verhältnismäßig geringen Druck- bzw. Temperaturniveau. Der Füllstand an flüssigem Wasser beträgt bspw. in dem Dampfspeicher 70%. Zu diesem Zeitpunkt liegt also ein Zweiphasengemisch zwischen flüssigem Wasser und Wasserdampf vor. Zusätzlich bzw. alternativ kann auch ein weiteres Gas wie etwa Luft sich im Behälter befinden, um etwa den Druck noch zu erhöhen. Wird nun der Dampfspeicher durch Betrieb der Wärmezuführeinrichtung 40 mit Wärme versorgt, kommt es zu einem Temperatur- und Druckanstieg. Der elektrische Strom wird also in Form von Wärme wie auch Druckenergie gespeichert. Diese Einspeicherung kann prinzipiell solange erfolgen, bis die Belastungsgrenze des Druckbehälters bezüglich Temperatur und/oder Druck erreicht ist. Eine solche Grenze könnte typischerweise durch den kritischen Punkt von Wasser bei 373 °C und 220 bar vorgegeben sein. Typische technische Ausführungen des Dampfspeichers weisen jedoch meist eine weitaus geringere Belastungsgrenze auf.

Der vorliegende Dampfspeicher weist typischerweise eine ausreichende Menge an flüssigem Wasser auf, so dass auch große Mengen an thermischer Energie gespeichert werden können, die einen Betrieb in Verbindung mit großtechnischen bzw. kraftwerkstechnischen Anlagen sinnvoll erscheinen lassen. Hierbei ist insbesondere auch erforderlich, dass die Wärmezufuhreinrichtung 40, welche bspw. als Widerstandsheizung oder auch als Elektrodenheizung ausgeführt sein kann, eine Leistungsabgabe im Bereich von wenigstens 1 MWₜₕ ermöglicht.

Bei der alternativen Verwendung von Wärmepumpen als Wärmezuführeinrichtung 40 kann auch Abwärme auf einem geringeren Temperaturniveau (ca. 70°C bis 120°C) nutzbar gemacht werden, wobei diese Abwärme mittels der Wärmepumpe auf ein höheres Temperaturniveau (ca. > 120°C) gehoben wird. Die dem Wärmespeicher 30 zur Verfügung gestellte Wärmemenge bei diesen höheren Temperaturen erfordert somit nicht ausschließlich eine äquivalente Menge an elektrischer Energie, die entsprechend in thermische Energie umgesetzt werden kann. Typische Wärmeströme auf einem solchen geringeren Temperaturniveau sind etwa im Kraftwerksbetrieb anfallende Abwässer oder Fernwärme, die auf einem Temperaturniveau von weniger als 100 °C vorliegen.

Die Entladung eines als Dampfspeicher ausgeführten Wärmespeichers 30 erfolgt durch gezielte Entnahme von dampfförmigem Wasser aus dem Wärmespeicher 30. Aufgrund der Entnahme des dampfförmigen Wassers kann es zu einer Nachverdampfung an der Wasseroberfläche des flüssigen Wassers in dem Dampfspeicher kommen, so dass sich im Raum oberhalb des flüssigen Wassers neuer Wasserdampf bildet. Durch die Dampfentnahme bzw. Nachverdampfung wird dem Behälter entsprechend Energie entzogen, wodurch es beim Entladen zu einer Temperatur- und Druckerniedrigung kommt.

Der entnommene Wasserdampf wird ausführungsgemäß zur Rückverstromung der Gasturbine 10 im Bereich der Brennkammer 12 dieser zugeleitet. Der Dampf sollte hierbei auf einem Druckniveau vorliegen, welches oberhalb des Brennkammerdrucks liegt. Wird alternativ oder auch zusätzlich der entnommene Dampf im Bereich des Kompressors 11 zugeführt, kann es ebenfalls erforderlich sein, dass der Wasserdampfdruck über dem jeweiligen Druck der Turbinenstufe liegt. Durch die Zuleitung von Dampf in die Gasturbine 10 kommt es zu einer Erhöhung des Massenstroms durch die Gasturbine 10, wodurch eine Erhöhung der Leistungsabgabe erreicht wird.

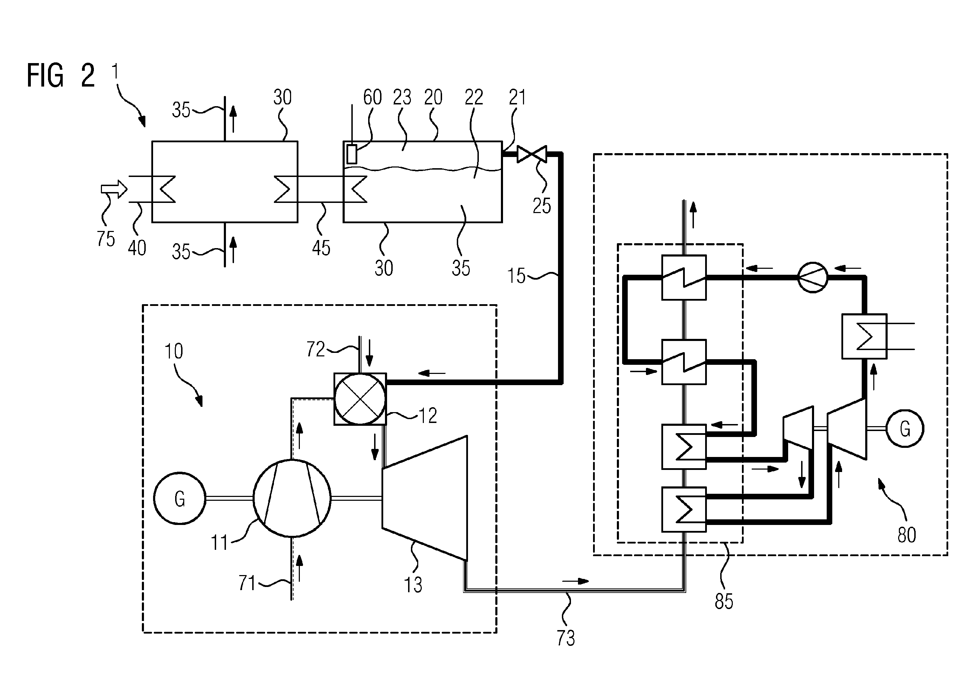

Figur 2 zeigt eine schematische Darstellung einer weiteren Ausführungsform des erfindungsgemäßen Gasturbinenkraftwerks 1, welches sich von der in Figur 1 gezeigten Ausführungsform lediglich dahingehend unterscheidet, dass der Wasserspeicher 20 von dem Wärmespeicher 30 getrennt vorliegen kann. Hierbei wird der Wärmespeicher 30 wiederum durch eine Wärmezuführeinrichtung 40 mittels elektrischen Stroms 75 mit thermischer Energie versorgt. Ebenfalls ist es möglich, dass zur Unterstützung der Wärmespeicher 30 durch thermisch konditioniertes Wärmespeichermedium 35 mit thermischer Energie versorgt werden kann. Die in dem Wärmespeicher 30 zeitlich zwischengespeicherte thermische Energie aus dem elektrischen Strom 75 wird mittels einer Wärmeübertragungseinrichtung 45 (etwa eine Heizleitung) dem Wasserspeicher 20 zugeleitet.

Die Funktion des Wasserspeichers 20 entspricht im Wesentlichen der Funktion des in Figur 1 gezeigten Wasserspeichers 20, wobei dieser wiederum mit Wasser 22 in flüssiger Form und Wasser 23 in dampfförmiger Form angefüllt ist. Da das Wasser 22, 23 wiederum thermische Energie wie auch Druckenergie zeitlich zwischenzuspeichern vermag, weist der Wasserspeicher 20 gleichzeitig auch die Funktion eines Wärmespeichers 30 auf. Insofern ist das flüssige Wasser 22 und das dampfförmige Wasser 23 auch ein Wärmespeichermedium 35. Ausführungsgemäß ist die Funktion des Wärmespeichers 30 aber nicht ausschließlich durch die des als Dampfspeicher ausgeführten Wasserspeichers 20 gegeben.

Entsprechend einer weiteren Ausführungsform der Erfindung kann eine Wärmezuführeinrichtung 40 auch in dem ebenfalls als Wasserspeicher 20 ausgebildeten Wärmespeicher 30 vorgesehen sein (vorliegend nicht gezeigt).

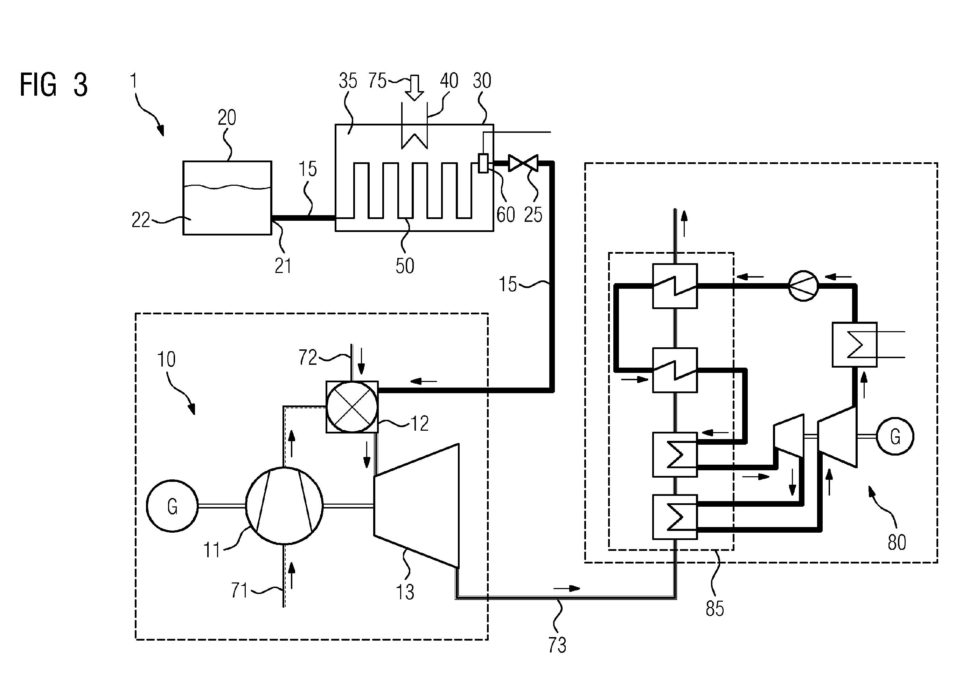

Figur 3 zeigt eine weitere Ausführungsform des erfindungsgemäßen Gasturbinenkraftwerks 1, welches sich von dem in Figur 1 gezeigten Gasturbinenkraftwerk 1 lediglich dahingehend unterscheidet, dass der Wasserspeicher 20 und der Wärmespeicher 30 separat voneinander angeordnet sind. Der Wasserspeicher 20 umfasst in erster Linie flüssiges Wasser 22, welches über die Entnahmeöffnung 21 über die Zuführleitung 15 wieder der Brennkammer 12 der Gasturbine 10 zugeleitet werden kann. Zur thermischen Aufbereitung dieses in der Zuführleitung 15 geführten Wassers führt die Zuführleitung 15 im Sinne eines Durchlauferhitzers 50 durch den Wärmespeicher 30, in welchem thermische Energie an die Zuführleitung 15 abgegeben wird. Der Wärmespeicher 30 kann hierbei wiederum durch eine Wärmezuführeinrichtung 40 mit thermischer Energie versorgt werden, welche durch Umwandlung aus elektrischem Strom 75 erzeugt wird. Der Wärmespeicher 30 weist zur Wärmespeicherung ein Wärmespeichermedium 35 auf.

Das Wärmespeichermedium 35 kann hierbei insbesondere ein sensibles Wärmespeichermedium, ein latentes Wärmespeichermedium oder auch ein thermochemisches Wärmespeichermedium sein. Im Falle eines sensiblen Wärmespeichermediums 35 kann bspw. eine Steinschüttung vorgesehen sein. Bei entsprechender Wärmezufuhr wird das Temperaturniveau des Speichermaterials erhöht. Im Falle eines als Latentwärmespeichers ausgeführten Wärmespeichers 30 findet durch den Wärmeeintrag lediglich eine Phasenumwandlung des Wärmespeichermediums 35 (z.B. Schmelzen eines Salzes oder Metalls, oder Flüssigkeit) statt, wodurch die Schmelzenthalpie zur Nutzung zur Verfügung steht. Im Falle eines thermochemischen Speichers wird bspw. die Wärme durch eine chemische und/oder physikalische Reaktion umgesetzt und mittels der Reaktionsprodukte gespeichert. Für die Entladung eines solchen Wärmespeichers 30 wird bspw. Wasser bzw. Druck zugeführt, wodurch infolge der sich umkehrenden Reaktion wieder Wärme freigesetzt werden kann. Diese Wärme kann folglich zur thermischen Konditionierung des Wassers in Zuleitung 15 genutzt werden.

Um das Druckniveau des in Zuleitung 15 befindlichen Wassers zu erfassen, kann wiederum ein Drucksensor 60 mit der Zuführleitung 15 verschaltet sein.

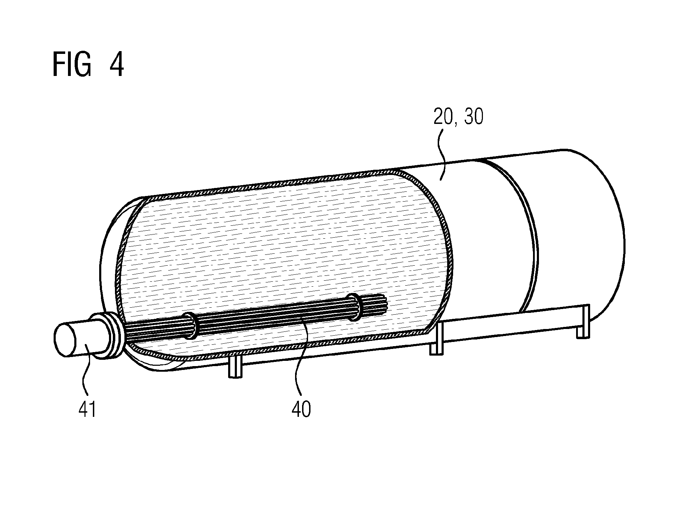

Figur 4 zeigt eine technische Darstellung in dreidimensionaler Ansicht eines als Dampfspeicher ausgeführten Wasserspeichers 20 bzw. Wärmespeichers 30. Dieser umfasst neben einer widerstandsfähigen metallischen Hülle eine als Widerstandsheizung ausgeführte Wärmezuführeinrichtung 40, die durch die Hülle des Dampfspeichers geführt ist. Der elektrische Anschluss erfolgt über ein Anschlussstück 41. Die Wärmezuführeinrichtung 40 ist hierbei bei betriebsgemäßer Anordnung des Dampfspeichers unten am Wasserspeicher 20 bzw. Wärmespeicher 30 vorgesehen, wobei die Heizstäbe in einem Bündel angeordnet sind.

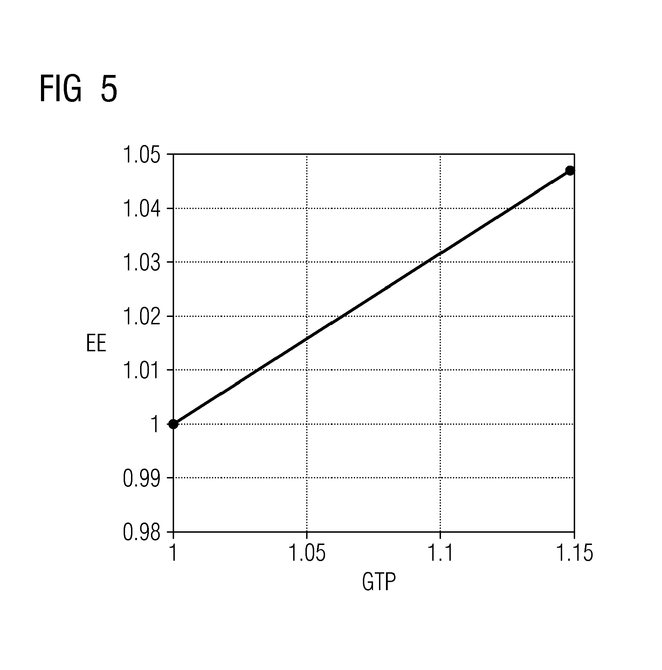

Figur 5 zeigt eine auf einer Modellrechnung beruhende Änderungskurve des sich verändernden elektrischen Wirkungsgrades EE (entspricht der erzeugten elektrische Energie einer Gasturbine 10, bezogen auf die ihr zugeführten Brennstoffenergie) in Abhängigkeit der sich verändernden Leistung des Gasturbinenkraftwerks 1 GTP bei Zuleitung von Wasser in die Gasturbine 10. Aufgrund der Zuleitung von Wasser kommt es zu einer Erhöhung der abgegebenen elektrischen Leistung der Gasturbine 10, die auch mit einer Erhöhung des elektrischen Wirkungsgrades einhergeht, da die zusätzliche elektrische Leistung nicht durch den Brennstoff bereit gestellt werden muss, sondern vollständig aus der Energie des zugeleiteten Wassers entnommen werden kann. Die Erhöhung der elektrischen Abgabeleistung der Gasturbine 10 resultiert also aus der zusätzlich aus dem Wasserdampf stammenden thermischen Energie, die bei Entspannung über den Expander 13 der Gasturbine 10 zur Rückverstromung zur Verfügung steht.

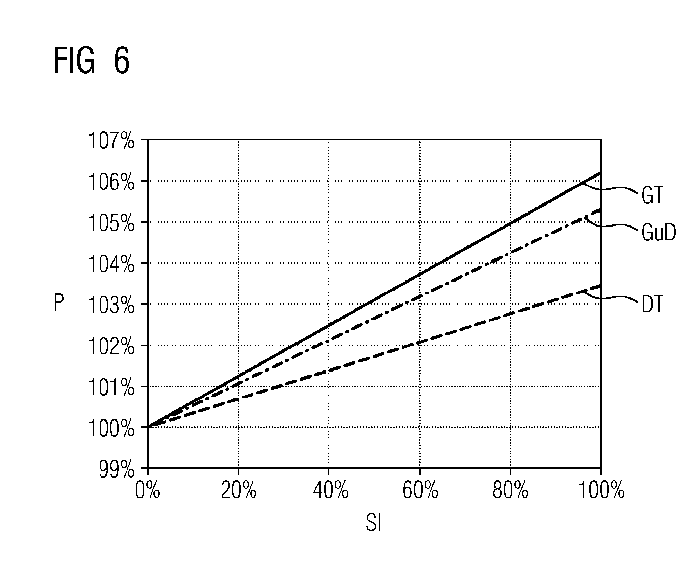

Ist das Gasturbinenkraftwerk 1 bspw. als kombiniertes Gas- und Dampfkraftwerk (GuD) ausgeführt, erhöht sich damit auch die Abgabeleistung des nachgeschalteten Dampfturbinenprozesses. Dies ist in Figur 6 wieder in einer Modellrechnung dargestellt, welche die Abhängigkeit der veränderten Abgabeleistung (von Gasturbine GT, oder von Dampfturbine DT oder von dem Gasturbinenkraftwerk 1 GuD) in Abhängigkeit von der relativen Menge des an die Gasturbine zugeführten Dampfes wiedergibt. Hierbei führt die Erhöhung des Massenstroms des Gasturbinenabgases 73 auch zu einem erhöhten Wärmeeintrag bei dem nachgeschalteten Wasserdampfkreislauf des Dampfteils DT. Dies wiederum führt zu einer Erhöhung der Abgabeleistung der Dampfturbine 80, DT. Bei entsprechender Rückverstromung wird folglich die Energie des in die Gasturbine 10, GT zugeleiteten Wassers zur Erhöhung der Leistung aller Kraftwerksteile des Kraftwerks (Gasturbine 10, GT und Dampfturbine 80, DT) genutzt. Jedoch weist die Leistungserhöhung des Dampfturbinenteils DT typischerweise einen geringeren Anstieg auf im Vergleich zur Leistungsänderung des Gasturbinenteils GT. Die kombinierte Leistungserhöhung beider Teile in einem Gas- und Dampfkraftwerk GUD weist folglich einen mittleren Anstieg auf.

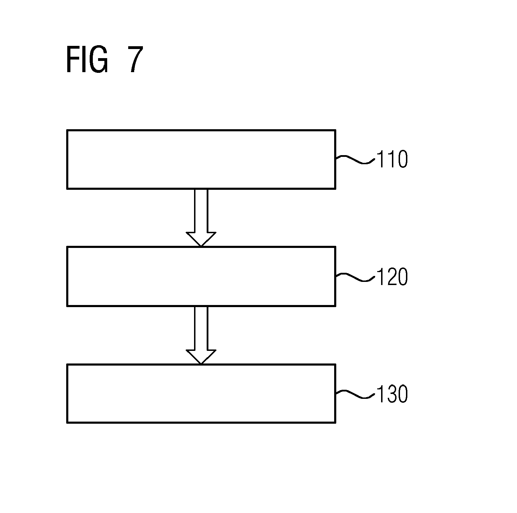

Figur 7 zeigt eine bevorzugte Ausführungsform des erfindungsgemäßen Verfahrens zum Betrieb eines vorab beschriebenen Gaskraftwerks 1, welches folgende Schritte umfasst:
- Betreiben einer elektrisch betriebenen Wärmezufuhreinrichtung 40 und Speicherung dieser Wärme in einem Wärmespeicher 30 (erster Verfahrensschritt 110);
- Entnehmen von Wasser aus dem Wasserspeicher 20, wobei das Wasser in dem Wasserspeicher und/oder außerhalb des Wasserspeichers 20 thermisch mit Wärme aus dem Wärmespeicher 30 konditioniert wird (zweiter Verfahrensschritt 120);
- Zuleiten des so thermisch konditionierten Wassers an die Gasturbine 10 zur Erhöhung des Massenstroms bei deren Betrieb (dritter Verfahrensschritt 130).

Die vorliegende Erfindung erlaubt die großtechnische Stromspeicherung mit einem verhältnismäßig hohen Wirkungsgrad. Der Strom-zu-Strom-Wirkungsgrad errechnet sich hierbei insbesondere aus der zugeführten Strommenge beim Laden des Wärmespeichers 30 sowie betriebsspezifischen Parametern des Gasturbinenkraftwerks 1 zum Entladen des Wärmespeichers 30. Die Berechnung des Speicherwirkungsgrads hat hierbei die Energieflüsse während des Ladens und Entladens des Wärmespeichers 30 zu berücksichtigen. Beim Laden wird elektrische Energie bspw. zu 100% in Wärmeenergie umgesetzt, wobei diese dann in einem Dampfspeicher bzw. einem Wärmespeicher 30 gespeichert werden kann. Beim Entladen des Wärmespeichers 30 wird bspw. ein als gekoppeltes Gas- und Dampfkraftwerk ausgebildetes Gasturbinenkraftwerk 1 betrieben. Wenn bspw. Dampf in die Gasturbine 1 zugeleitet wird, wird etwa der Brennstoffmassenstrom erhöht, um die Verbrennungstemperatur und damit die Turbineneintrittstemperatur nahezu konstant zu halten. Ein solcher Betrieb ermöglicht typischerweise den effizientesten Gasturbinenbetrieb. Bei Entladung von bspw. 10MWh an thermischer Energie kann ein zusätzlicher Brennstoffverbrauch von 13,6MWh an Brennstoffenergie nötig sein. Der virtuelle Wirkungsgrad der zusätzlichen Stromerzeugung beträgt daher etwa 75%.

Ein Gasturbinenkraftwerk 1 verbraucht etwa bei herkömmlichem Betrieb eine Brennstoffmenge von etwa 322 MWh. Durch einen gewöhnlichen Betrieb dieses Gasturbinenkraftwerks 1 bei einem Wirkungsgrad von 60,5% kann so eine Strommenge von 195 MWh erzeugt werden. Die Zuleitung von Dampf aus dem Wärmespeicher 30 mit der zusätzlichen Brennstoffmenge von 13,6 MWh ermöglicht somit eine zusätzliche Stromerzeugung von 10,2 MWh. Da die zusätzliche Stromerzeugung durch eine Kombination aus der gespeicherten Wärmeenergie und der zusätzlichen Brennstoffmenge realisiert wird, hängt der Speicherwirkungsgrad vom angenommenen Wirkungsgrad einer Referenzstromerzeugung ab. Geht man etwa davon aus, dass in einem Referenzfall Strom mit einem hohen Wirkungsgrad aus der zusätzlichen Brennstoffmenge erzeugt wird, liegt ein hoher Anteil vor, wobei der durch den Wasserdampf beigetragenen Wärmeanteil nur einen geringen Anteil zur Stromerzeugung beiträgt. Wird hingegen im Referenzfall Strom mit nur einem geringeren Wirkungsgrad erzeugt, trägt der Wasserdampf zur Stromerzeugung einen relativ höheren Anteil bei. Bei einem hohen Referenzwirkungsgrad von etwa 60% trägt die Stromerzeugung aus dem Dampfspeicher etwa nur mit etwa 2,5 MWh zu der Gesamtstromerzeugung von 10,2 MWh bei. Bei einem Referenzwirkungsgrad von 30 bis 40% beträgt der Anteil dann jedoch schon 4,5 bis 6 MWh. Der daraus resultierende Speicherwirkungsgrad (Strom-zu-Strom) kann hierbei 20% bis 60% erreichen.

Weitere Ausführungsformen ergeben sich aus den Unteransprüchen.

## Patentansprüche

1. Gasturbinenkraftwerk (1), umfassend eine einen Kompressor (11), eine Brennkammer (12) und einen Expander (13) aufweisende Gasturbine (10), sowie einen wenigstens teilweise mit Wasser gefüllten Wasserspeicher (20), welcher mit der Gasturbine (10) über eine Zuführleitung (15) fluidtechnisch derart verschaltet ist, dass Wasser aus dem Wasserspeicher (20) der Gasturbine (10) zur Erhöhung des Massenstroms bei Betrieb zugeleitet werden kann, wobei der Wasserspeicher (10) und/oder die Zuführleitung (15) mit einem Wärmespeicher (30) wärmetechnisch verschaltet ist, welcher Wärmespeicher (30) mittels einer elektrisch betriebenen Wärmezufuhreinrichtung (40) mit Wärme versorgt werden kann.

2. Gasturbinenkraftwerk gemäß Anspruch 1,
**dadurch gekennzeichnet, dass** die Wärmezufuhreinrichtung (30) wenigstens teilweise als elektrisch betriebene Heizung, insbesondere als elektrisch betriebene Widerstandsheizung ausgebildet ist.

3. Gasturbinenkraftwerk gemäß Anspruch 1,
**dadurch gekennzeichnet, dass** die Wärmezufuhreinrichtung (30) als elektrisch betriebene Wärmepumpe ausgebildet ist.

4. Gasturbinenkraftwerk gemäß einem der vorhergehenden Ansprüche,
**dadurch gekennzeichnet, dass** der Wasserspeicher (10) gleichzeitig auch als Wärmespeicher (30) ausgebildet ist, wobei der Wasserspeicher (10) insbesondere eine thermische Isolierung aufweist.

5. Gasturbinenkraftwerk gemäß Anspruch 4,
**dadurch gekennzeichnet, dass** der Wärmespeicher (30) als wenigstens teilweise mit Wasser gefüllter Dampfspeicher ausgebildet ist.

6. Gasturbinenkraftwerk gemäß Anspruch 5,
**dadurch gekennzeichnet, dass** der Dampfspeicher als einziges Wärmezufuhrmittel eine elektrisch betriebene Heizung (30) oder eine elektrisch betriebene Wärmepumpe aufweist.

7. Gasturbinenkraftwerk gemäß einem der vorhergehenden Ansprüche 5 oder 6,
**dadurch gekennzeichnet, dass** der Dampfspeicher als Druckspeicher ausgebildet ist, der insbesondere für einen Betriebsdruck von mindestens 15 bar, bevorzugt von 30 bis 40 bar und ganz besonders bevorzugt von 80 bis 150 bar ausgelegt ist.

8. Gasturbinenkraftwerk gemäß einem der vorhergehenden Ansprüche,
**dadurch gekennzeichnet, dass** der Dampfspeicher als Dampftrommel ausgebildet ist, welche ein Volumen von mindestens 15 m³, insbesondere von wenigstens 20 m³ und bevorzugt von wenigstens 30 m³ aufweist.

9. Gasturbinenkraftwerk gemäß einem der vorhergehenden Ansprüche 4 bis 8,
**dadurch gekennzeichnet, dass** der Wasserspeicher (20) bei Normalbedingungen einen Füllstand des flüssigen Wassers von mindestens 10% und höchstens 90% des Volumens des Wasserspeichers (20) aufweist, bevorzugt einen Füllstand von mindestens 30% und höchstens 80% des Volumens des Wasserspeichers (20) aufweist, und ganz besonders bevorzugt einen Füllstand von mindestens 40% und höchstens 70% des Volumens des Wasserspeichers (20) aufweist.

10. Gasturbinenkraftwerk gemäß einem der vorhergehenden Ansprüche 4 bis 9,
**dadurch gekennzeichnet, dass** der Wasserspeicher (20) eine bei betriebsgemäßer Anordnung oben am Wasserspeicher (20) angeordnete Entnahmeöffnung (21) aufweist, welche insbesondere ein geeignetes Entnahmeventil (25) aufweist.

11. Gasturbinenkraftwerk gemäß einem der vorhergehenden Ansprüche,
**dadurch gekennzeichnet, dass** weiterhin ein Drucksensor (60) umfasst ist, welcher erlaubt, den Druck des der Gasturbine (10) zugeführten Wassers zu erfassen.

12. Gasturbinenkraftwerk gemäß einem der vorhergehenden Ansprüche 1 bis 3,
**dadurch gekennzeichnet, dass** der Wärmespeicher (30) einen Durchlauferhitzer (50) aufweist, welcher mit der Zuführleitung (15) fluidtechnisch verschaltet ist.

13. Verfahren zum Betrieb eines Gaskraftwerks (1) gemäß einem der vorhergehenden Ansprüche, umfassend die folgenden Schritte:
- Betreiben einer elektrisch betriebenen Wärmezufuhreinrichtung (40) und Speicherung dieser Wärme in einem Wärmespeicher (30);
- Entnehmen von Wasser aus dem Wasserspeicher (20), wobei das Wasser in dem Wasserspeicher und/oder außerhalb des Wasserspeichers (20) thermisch mit Wärme aus dem Wärmespeicher (30) konditioniert wird;
- Zuleiten des so thermisch konditionierten Wassers an die Gasturbine (10) zur Erhöhung des Massenstroms bei deren Betrieb;

14. Verfahren gemäß Anspruch 13,
**dadurch gekennzeichnet, dass** das Betreiben der elektrisch betriebenen Wärmezufuhreinrichtung (40) unter Nutzung von Überschussstrom erfolgt.
